# EUROPÄISCHE PATENTSCHRIFT

(11) **EP 3 083 292 B1**
(45) Veröffentlichungstag und Bekanntmachung des Hinweises auf die Patenterteilung: **07.07.2021**
(21) Anmeldenummer: 14821570.0
(22) Anmeldetag: 16.12.2014
(51) Int. Cl.: B60C 23/04

(54) **VERFAHREN UND VORRICHTUNG ZUM BETREIBEN EINER REIFENDRUCKKONTROLLEINRICHTUNG**
METHOD AND DEVICE FOR OPERATING A TYRE PRESSURE MONITORING DEVICE
PROCÉDÉ ET DISPOSITIF POUR FAIRE FONCTIONNER UN DISPOSITIF DE CONTRÔLE DE PRESSION DE PNEUMATIQUE

(30) Priorität: 20.12.2013 DE 102013114726
(43) Veröffentlichungstag der Anmeldung: 26.10.2016
(73) Patentinhaber: Huf Baolong Electronics Bretten GmbH, 75015 Bretten (DE)
(72) Erfinder: SEIFERT, Andre, 75181 Pforzheim (DE); MÜLLER, Benjamin, 45133 Essen (DE); WAGNER, Markus, 71638 Ludwigsburg (DE); SANDROCK, Karsten, 75015 Bretten (DE); BRAND, Peter, 75249 Kieselbronn (DE)
(74) Vertreter: Twelmeier Mommer & Partner
(86) Internationale Anmeldenummer: PCT/EP2014/077914
(87) Internationale Veröffentlichungsnummer: WO 2015/091450

(56) Entgegenhaltungen:
- WO-A1-2013/153088
- US-A1- 2005 253 697
- None

## Beschreibung

Die Erfindung geht von einem Verfahren mit den im Oberbegriff des Patentanspruchs 1 angegebenen Merkmalen aus. Ein solches Verfahren ist aus der DE 10 2004 026 035 B4 bekannt. Dieses Patent offenbart ein Reifendruckkontrollsystem mit an den Rädern eines Fahrzeugs angebrachten Einrichtungen zur Überwachung des Reifendrucks, welche als elektrische Stromquelle keine Batterie, sondern einen mechanisch-elektrischen Wandler aufweisen. Der mechanisch-elektrische Wandler wird so gesteuert, dass in wichtigen Betriebsphasen, in denen häufige Mess- und Sendevorgänge gefordert sind, für die Mess- und Sendevorgänge genügend elektrische Energie in einem wiederaufladbaren Speicher gespeichert ist. In Betriebsphasen, die weniger wichtig sind, z. B. bei Langsamfahrt, kann der Speicher durch den mechanisch-elektrischen Wandler wieder aufgeladen werden. Die Versorgung der Reifendruckkontrolleinrichtung mit der für ihren Betrieb erforderlichen elektrischen Energie wird durch ein am Fahrzeug angebrachtes zentrales Steuergerät gesteuert, welches mit den an den Rädern des Fahrzeugs angebrachten Reifendruckkontrolleinrichtungen in Funkverbindung steht. Über die Funkverbindung erhält das zentrale Steuergerät von den einzelnen Reifendruckkontrolleinrichtungen ständig Informationen über den Ladezustand des in den Reifendruckkontrolleinrichtungen vorhandenen Speichers und bestimmt daraus, wann die jeweilige Reifendruckkontrolleinrichtung das nächste Mal den Reifendruck messen und an das zentrale Steuergerät senden kann. Die für das Aufrechterhalten der für die Steuerung der Energieversorgung der jeweiligen Reifendruckkontrolleinrichtung erforderlichen Energie wird ebenfalls durch den in der Reifendruckkontrolleinrichtung vorgesehenen mechanisch-elektrischen Wandler erzeugt und gespeichert.

Die US 2005/253697 A1 offenbart ein Reifendruckkontrollsystem mit an den Rädern angebrachten Reifendruckkontrolleinrichtungen, welche einen elektrischen Kondensator enthalten, welcher durch elektrische Signale aufgeladen wird, welche von einem außerhalb der Reifendruckkontrolleinrichtung angeordneten Steuergerät ausgesandt und durch Funk übertragen werden.

Die WO 2013/153088 A1 offenbart eine an einem Reifen angebrachte Reifendruckkontrolleinrichtung, welche einen piezoelektrischen Wandler enthält, der elektrische Energie erzeugt, die in einem Kondensator gespeichert wird.

Der vorliegenden Erfindung liegt die Aufgabe zugrunde, verglichen mit dem aus der DE 10 2014 026 035 B4 bekannten Stand der Technik den Aufwand für die Energieversorgung der Reifendruckkontrolleinrichtung zu verringern.

Diese Aufgabe wird durch ein Verfahren mit den im Patentanspruch 1 angegebenen Merkmalen und durch eine Vorrichtung mit den im Anspruch 14 angegebenen Merkmalen gelöst. Vorteilhafte Weiterbildungen der Erfindung sind Gegenstand der Unteransprüche.

Das erfindungsgemäße Verfahren dient zum Betreiben einer Reifendruckkontrolleinrichtung, welche an einem mit einem Luftreifen versehenen Rad eines Fahrzeugs angebracht ist und einen Sensor, welcher ein vom Reifendruck abhängiges elektrisches Ausgangssignal liefert, einen Sender, welcher in Sendeintervallen, zwischen welchen jeweils eine erste Sendepause liegt, drahtlos Signale sendet, welche eine vom Ausgangssignal des Sensors abhängige Information enthalten, eine Steuereinrichtung, welche den Sensor, den Sender und dessen erste Sendepause steuert, eine Quelle, welche elektrische Energie für das Betreiben der Reifendruckkontrolleinrichtung liefert, und einen wiederaufladbaren elektrischen Speicher enthält, in welchem von der Quelle gelieferte elektrische Energie gespeichert wird, bis sie für das Betreiben der Reifendruckkontrolleinrichtung benötigt wird. Erfindungsgemäß wird der Ladezustand des Speichers durch eine in der Reifendruckkontrolleinrichtung vorgesehene Überwachungseinrichtung überwacht und eine oder mehrere der ersten Sendepausen werden dann beendet, sobald im Speicher genug elektrische Energie gespeichert ist, um die Reifendruckkontrolleinrichtung zwischen zwei aufeinander folgenden ersten Sendepausen bis zum Abschluss einer vorbestimmten Anzahl von Sendvorgängen zu betreiben.

Das hat wesentliche Vorteile:
- Der Ladezustand des wiederaufladbaren Speichers wird ausschließlich in der Reifendruckkontrolleinrichtung überwacht und gesteuert. Insoweit kann die Reifendruckkontrolleinrichtung autonom arbeiten und ist nicht auf eine externe Steuerung über eine Funkverbindung angewiesen.
- Das Vermeiden einer externen Steuerung über eine Funkverbindung macht die Steuerung des Ladezustands des Speichers in der Reifendruckkontrolleinrichtung weniger störanfällig.
- Die Energie, die im Stand der Technik für eine externe Steuerung benötigt wird, entfällt bei Anwendung des erfindungsgemäßen Verfahrens. Das führt zu dem weiteren Vorteil, dass in der Reifendruckkontrolleinrichtung weniger elektrische Energie erzeugt und gespeichert werden muss.
- Da weniger Energie als im Stand der Technik gespeichert werden muss, kann der dafür vorgesehene wiederaufladbare Speicher kleiner sein als im Stand der Technik. Das spart Kosten und Gewicht.
- Weil beim erfindungsgemäßen Verfahren Gewicht der Reifendruckkontrolleinrichtung eingespart werden kann, lässt sich die Unwucht verkleinern, welche die Reifendruckkontrolleinrichtung am Rad verursacht.
- Dadurch, dass in der Reifendruckkontrolleinrichtung nicht mehr so viel Energie erzeugt werden muss wie im Stand der Technik, verringert sich die Zeit, die nach einem Mess- und Sendevorgang der Reifendruckkontrolleinrichtung zum Wiederaufladen des Speichers benötigt wird. Das ermöglicht es, die Sendepausen zwischen den Mess- und Sendevorgängen der Reifendrucckontrolleinrichtung zu verkürzen, woraus sich ein Gewinn an Fahrsicherheit ergibt.

Vorzugsweise wird jede erste Sendepause dann beendet, sobald im wiederaufladbaren Speicher genügend elektrische Energie gespeichert ist, um die Reifendruckkontrolleinrichtung bis zum Abschluss einer vorbestimmten Anzahl von Sendevorgängen betreiben zu können. Das führt im Ergebnis zu besonders kurzen ersten Sendepausen und zu einer entsprechend dichten Überwachung.

Die vorbestimmte Anzahl der zwischen zwei ersten Sendepausen erfolgenden Sendevorgänge, für welche in der vorausgegangenen ersten Sendepause genügend elektrische Energie gespeichert wurde, wird zu höchstens zwei Sendevorgängen gewählt, das heißt, dass auf einen vollständigen Mess- und Sendevorgang höchstens noch ein weiterer Mess- und Sendevorgang folgt, bevor die nächste erste Sendepause eingelegt wird. Dadurch lassen sich die Menge der zu speichernden Energie und die Länge der ersten Sendepause minimieren. Unter einem Sendevorgang wird die drahtlose Übermittlung einer Datenfolge verstanden, welche vorzugsweise einen vorbestimmten Aufbau hat. Eine solche Datenfolge wird auch als Telegramm bezeichnet. Sie kann zwischen einer Präambel am Beginn des Telegramms und einer Postambel am Ende des Telegramms binär codierte Daten enthalten, z. B. den gemessenen Reifendruck, einen daraus bestimmten Druckabfall, die in der Reifendruckkontrolleinrichtung gemessene Temperatur und eine individuelle Kennung der Reifendruckkontrolleinrichtung, anhand welcher ein im Fahrzeug vorgesehener Empfänger die Herkunft des Telegramms identifizieren kann. Ferner kann das Telegramm noch weitere Daten enthalten, z. B. die aktuelle Drehzahl und Drehrichtung des Rades, welche z. B. mit einem in der Reifendruckkontrolleinrichtung vorgesehenen Beschleunigungssensor bestimmt werden kann, und/oder Angaben über den Reifen.

Wenn zwischen zwei ersten Sendepausen mehrere Sendevorgänge vorgesehen und demgemäß mehrere Datentelegramme gesendet werden, dann können diese unmittelbar aneinander anschließen, aber auch durch zweite Sendepausen voneinander getrennt sein, welche zweckmäßigerweise klein sind gegen die ersten Sendepausen und vorzugsweise so gewählt sind, dass noch sicher erkannt werden kann, wo ein Datentelegramm endet und das nächste Datentelegramm beginnt. Dafür reichen einige wenige Millisekunden aus.

Vorzugsweise werden die ersten Sendepausen beendet, bevor die im wiederaufladbaren Speicher gespeicherte Energie einen Wert erreicht, der für zwei Sendevorgänge ausreicht und größer ist als die Energie, die für einen Mess- und Sendevorgang benötigt wird. Damit wird sichergestellt, dass am Ende einer jeden ersten Sendepause auf jeden Fall so viel Energie gespeichert ist, dass sie für einen Mess- und Sendevorgang sicher ausreicht. Wenn darüber hinaus bereits am Ende des ersten Sendevorgangs die nächste erste Sendepause beginnt, ermöglicht das bei einer besonders niedrigen zu speichernden Energiemenge eine besonders dichte Folge von Mess- und Sendevorgängen.

Vorzugsweise wird die Spannung des wiederaufladbaren Speichers überwacht und der Ladevorgang unterbrochen, wenn und solange die Spannung des wiederaufladbaren Speichers über einem vorgegebenen Grenzwert liegt. Dieser Grenzwert ist ein Maß für die Energie, die für das zuverlässige Betreiben der Reifendruckkontrolleinrichtung zwischen zwei aufeinander folgenden ersten Sendepausen erforderlich ist.

Vorzugsweise wird in der Reifendruckkontrolleinrichtung das Ausgangssignal des Sensors darauf überwacht, ob der gemessene Reifendruck einen vorgegebenen Grenzwert unterschreitet oder ob die Geschwindigkeit, mit welcher sich der gemessene Reifendruck ändert, einen vorgegebenen Grenzwert überschreitet. Diese Überwachung kann in der Reifendruckkontrolleinrichtung auch in ersten Sendepausen erfolgen; sie benötigt wesentlich weniger elektrische Energie als ein Sendevorgang. Wird durch die Überwachung festgestellt, dass der gemessene Reifendruck einen vorgegebenen Grenzwert unterschreitet oder dass die Geschwindigkeit, mit welcher sich der Reifendruck ändert, einen vorgegebenen Grenzwert überschreitet, dann wird in diesem Fall zweckmäßigerweise die aktuell bestehende erste Sendepause vorzeitig beendet und ein entsprechendes Warnsignal an ein zentrales Steuergerät des Fahrzeugs gefunkt.

Als wiederaufladbarer Speicher wird vorzugsweise ein Kondensator verwendet. Es hat sich gezeigt, dass man mit einem verhältnismäßig kleinen Kondensator auskommt, z. B. mit einem Kondensator, der eine Kapazität von 100 µF aufweist.

Für das Wiederaufladen des Speichers wird in der Reifendruckkontrolleinrichtung vorzugsweise ein Generator verwendet, welcher elektrische Energie aus der rollenden Bewegung des Rades erzeugt, insbesondere ein Generator, welcher für die Gewinnung von elektrischer Energie den piezoelektrischen Effekt nutzt. Ein solcher Generator kann bei jeder Umdrehung des Rades eine bestimmte elektrische Ladungsmenge erzeugen und im Speicher speichern. Daraus folgt, dass der Speicher, z. B. ein Kondensator, umso schneller aufgeladen wird, je schneller sich das Rad dreht bzw. je schneller das Fahrzeug fährt. Es ist deshalb vorteilhaft, das erfindungsgemäße Verfahren so weiterzubilden, dass die erste Pausenzeit mit zunehmender Drehzahl des Rades verkürzt wird. In vorteilhafter Weise führt das dazu, dass die Überwachung des Reifendrucks mit zunehmender Geschwindigkeit des Fahrzeugs bzw. mit zunehmender Drehzahl des Rades immer besser werden kann. Das ist vorteilhaft, weil das sich aus einem Druckabfall im Reifen ergebende Gefährdungspotential mit der Geschwindigkeit des Fahrzeugs zunimmt. Aus diesem Grund ist es vorteilhaft, die erste Pausenzeit mit zunehmender Drehzahl des Rades auch dann zu verkürzen, wenn der Generator, der die zu speichernde elektrische Energie liefert, seine Energie unabhängig von der Drehzahl des Rades liefert. Letzteres ist z. B. dann der Fall, wenn in der Reifendruckkontrolleinrichtung ein Funkempfänger vorgesehen ist, welchem die zu speichernde elektrische Energie durch einen im Fahrzeug mitgeführten Sender von außerhalb der Reifendruckkontrolleinrichtung übertragen wird. Das kann z. B. durch Funksignale geschehen, welche eine wesentlich niedrigere Frequenz, z. B. 125 KHz, haben, als die Funksignale, welche von der Reifendruckkontrolleinrichtung ausgesandt werden und mit Frequenzen im Bereich von einigen hundert Megahertz arbeiten.

Der weiteren Erläuterung der Erfindung dienen die beigefügten Zeichnungen, anhand von denen ein Ausführungsbeispiel beschrieben wird.
- Figur 1: ist ein Blockschaltbild einer Schaltungsanordnung zur Durchführung des erfindungsgemäßen Verfahrens und

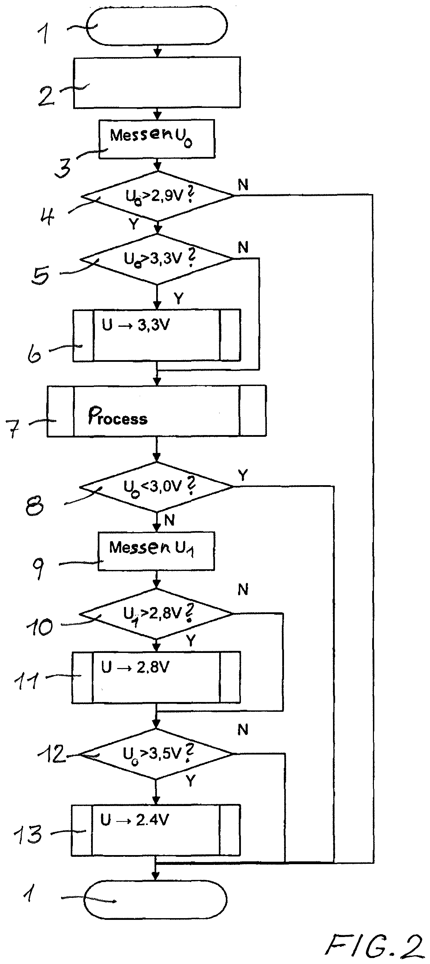

- Figur 2: ist ein Fließdiagramm für ein Ausführungsbeispiel des erfindungsgemäßen Verfahrens.

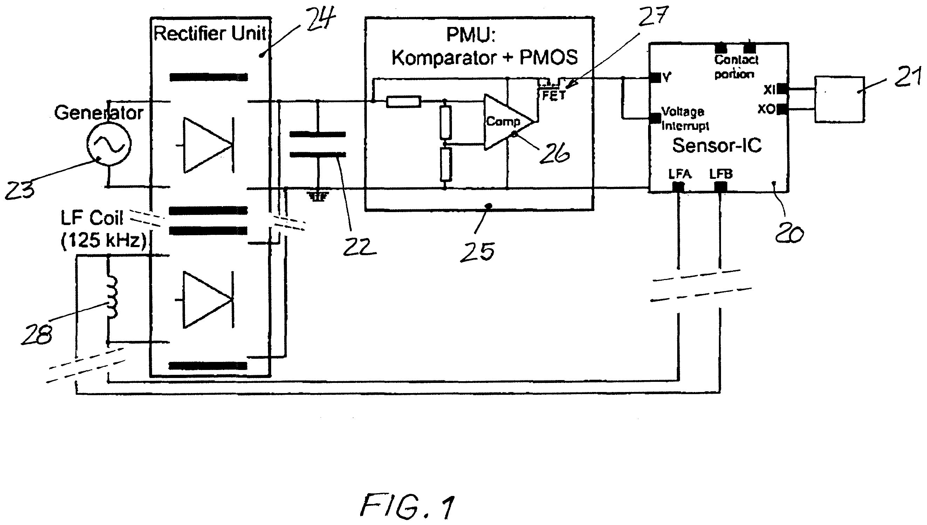

Die in Figur 1 dargestellte Schaltungsanordnung zeigt einen integrierten Schaltkreis 20 als Herzstück einer am Rad eines Fahrzeugs befestigten Reifendruckkontrolleinrichtung. Der integrierte Schaltkreis 20 enthält wenigstens einen Drucksensor, welcher den Reifendruck messen kann, und bestimmt den Inhalt von Datentelegrammen, die ein mit dem integrierten Schaltkreis 20 verbundener Sender der Reifendruckkontrolleinrichtung an einen im Fahrzeug vorgesehenen Empfänger funkt. Ein Oszillator 21 liefert die Taktfrequenz für den integrierten Schaltkreis 20. Bei dem integrierten Schaltkreis 20 kann es sich um einen ASIC, dass ist ein anwendungsspezifischer Schaltkreis, um einen Mikroprozessor oder um einen Mikrocontroller handeln.

Zur Stromversorgung des integrierten Schaltkreises 20 ist ein wiederaufladbarer Speicher vorgesehen, bei welchem es sich im dargestellten Beispiel um einen Kondensator 22 handelt. Der Kondensator 22 wird durch einen in der Reifendruckkontrolleinrichtung vorgesehenen Generator 23 aufgeladen, bei welchem es sich vorzugsweise um einen piezoelekrischen Generator handelt, welcher eine piezoelektrische Spannung aus der rollenden Bewegung des Rades erzeugt, an welchem die Reifendruckkontrolleinrichtung montiert ist. Der piezoelektrische Generator 23 kann z. B. eine Piezoscheibe enthalten, die mit einem beweglich gelagerten Massekörper verbunden ist, welcher bei rollendem Rad mit wechselnden Zentrifugalkräften auf die Piezoscheibe einwirkt, welche darauf mit einer piezoelektrisch erzeugten Wechselspannung antwortet. Ein solcher piezoelektrischer Generator ist z. B. in der EP 1 549 514 B1 offenbart. Das piezoelektrische erzeugte Wechselspannungssignal wird mittels eines Gleichrichters 24 gleichgerichtet. Mit der gleichgerichteten Spannung wird der Kondensator 22 aufgeladen.

Die Spannung des Kondensators 22 wird durch eine Power Management Einheit 25 geregelt, welche als wesentliche Bestandteile einen Komparator 26 und einen Feldeffekttransistor 27, insbesondere einen PEMOS FET aufweist. Der Kondensator 22 versorgt den integrierten Schaltkreis 20 in den Phasen, in welchen Mess- und Sendevorgänge stattfinden sollen, über die Power Management Einheit 25 mit Strom. Diese Phasen werden durch die Schaltvorgänge des Feldeffekttransistors 27 gestartet und beendet.

Wahlweise kann der integrierte Schaltkreis 20 mit einer Empfängerspule 28 verbunden sein, welche niederfrequente Signale empfangen kann, insbesonde re Signale mit einer Frequenz von 125 KHz, welche drahtlos von außerhalb der Reifendruckkontrolleinrichtung übermittelt werden. Über diese Empfängerspule 28 können dem integrierten Schaltkreis 20 Steuersignale und/oder Daten übermittelt werden. Eine solche Empfängerspule 28 kann auch dazu verwendet werden, um anstelle des Generators 23 oder in Ergänzung des Generators 23 Signale zu empfangen, die nach Gleichrichtung ebenfalls zum Aufladen des Kondensators 22 verwendet werden können.

Um kenntlich zu machen, dass es sich dabei nur um eine mögliche Option handelt, sind die Verbindungsleitungen von der Empfängerspule 28 zum Kondensator 22 und zum integrierten Schaltkreis 20 unterbrochen dargestellt.

Ein Beispiel eines erfindungsgemäßen Verfahrens, welches mit einer Schaltungsanordnung der in Figur 1 dargestellten Art durchgeführt werden kann, wird nachfolgend beschrieben.

Das Verfahren startet mit einer Aktivierung der Reifendruckkontrolleinrichtung im Schritt 1. Danach geht die Reifendruckkontrolleinrichtung mit dem Schritt 2 in eine Ladephase über, in welcher ein als Kondensator ausgebildeter wiederaufladbarer Speicher aufgeladen werden soll, z. B. der Kondensator 22 der Schaltungsanordnung aus Figur 1. Die Ladephase dauert eine vorgegebene Zeitspanne. Sie soll nicht so lange dauern, dass der Kondensator 22 einen oberen Grenzwert der Spannung erreicht oder überschreitet, der zur Überlastung der nachgeordneten Schaltung führen könnte, insbesondere des integrierten Schaltkreises 20 aus Figur 1, welcher durch den Kondensator 22 mit Strom versorgt wird. Es hat sich gezeigt, dass eine Dauer von einer Sekunde für die Ladephase günstig ist. Länger als 1,5 Sekunden sollte sie bei einer Schaltung, wie sie in Figur 1 dargestellt ist, nicht dauern.

Die Ladephase endet mit dem Beginn des Prozesses 7, in welchem in der Reifendruckkontrolleinrichtung ein Mess- und Sendevorgang abläuft. Um dahin zu kommen, wird nach dem Start der Ladephase in einer ersten Regelschleife im folgenden Schritt 3 zunächst die Spannung U₀ des Kondensators 22 gemessen und im Schritt 4 mit einem ersten Schwellenwert verglichen, für den 2,9 V ein praxisnaher Wert ist. Liegt die Spannung U₀ des Kondensators 22 nicht über dem ersten Schwellenwert, springt das Verfahren zurück zum Schritt 1, um - eventuell nach einer kurzen Unterbrechung - die Spannung des Kondensators 22 weiter zu erhöhen. Ergibt jedoch der im Schritt 4 durchgeführte Vergleich, dass die Spannung U₀ des Kondensators 22 über dem ersten Schwellenwert von z. B. 2,9 V liegt, dann wird die Spannung des Kondensators 22 im nächsten Schritt 5 mit einem oberen Grenzwert von z. B. 3,3 V verglichen, der so gewählt ist, dass er etwas unterhalb jener Spannung liegt, bei welcher die dem Kondensator 22 nachgeordnete Schaltung überlastet würde. In der in Figur 1 dargestellten Schaltung ist es der integrierte Schaltkreis 20, dessen Belastbarkeit die höchstzulässige Spannung des Kondensators 22 bestimmt. Ergibt der im Schritt 5 durchgeführte Vergleich, dass die Spannung U₀ des Kondensators 22 den vorgegebenen oberen Grenzwert von z. B. 3,3 V überschreitet, dann wird im sechsten Schritt die Spannung des Kondensators 22 auf den oberen Grenzwert von z. B. 3,3 V herabgesetzt und es kann der Prozess 7 gestartet werden, in welchem ein Mess- und Sendevorgang abläuft. Wenn jedoch der im Schritt 5 durchgeführte Vergleich ergibt, dass die Spannung U₀ des Kondensators 22 nicht über dem oberen Grenzwert von z. B. 3,3 V liegt, dann kann das Verfahren unter Umgehung des Schrittes 6 zum Prozess 7 fortschreiten. Während der Prozess 7 abläuft, ist die Ladephase unterbrochen, da der Energieverbrauch größer ist, als die Ladeschaltung liefern kann.

Mit Abschluss des Prozesses 7 beginnt die nächste Ladephase und in einer zweiten Regelschleife wird im Schritt 8 geprüft, ob dann die Spannung U₀ des Kondensators 22 einen zweiten Schwellenwert unterschreitet. Ein praxisnaher Wert für den zweiten Schwellenwert ist 3 V. Hat der im Schritt 8 durchgeführte Vergleich das Ergebnis, dass die Spannung U₀ des Kondensators 22 unter dem zweiten Schwellenwert von z. B. 3 V liegt, springt das Verfahren zurück zum Schritt 1. Hat der im Schritt 8 durchgeführte Vergleich jedoch das Ergebnis, dass die Spannung U₀ des Kondensators 22 nicht unter dem zweiten Schwellenwert von z B. 3 V liegt, dann wird die tatsächliche Spannung U₁ des Kondensators 22 im Schritt 9 gemessen, um im Schritt 10 festzustellen, ob sie größer ist als ein dritter Schwellenwert, der unter dem zweiten Schwellenwert von z. B. 3 V liegt und z. B. 2,8 V beträgt. Liegt die tatsächliche Spannung U₁ des Kondensators 22 über dem dritten Schwellenwert von z. B. 2,8 V, wird sie im Schritt 11 auf den dritten Schwellenwert von z. B. 2,8 V reduziert. Im Schritt 12 wird, da der Ladevorgang fortschreitet, überprüft, ob dann die Spannung U₀ des Kondensators 22 den oberen Grenzwert von z. B. 3,3 V überschritten hat. Wenn jedoch der im Schritt 10 durchgeführte Vergleich das Ergebnis hat, dass die tatsächliche Spannung des Kondensators 22 nicht über 2,8 V liegt, wird das Verfahren unter Umgehung des Schrittes 11 mit dem Schritt 12 fortgesetzt, in welchem die Spannung U₀ des Kondensators 22 mit ihrem oberen Grenzwert von z. B. 3,5 V verglichen wird. Ist der obere Grenzwert der Spannung U₀ des Kondensators 22 von z. B. 3,5 V überschritten, wird im Schritt 13 die Spannung des Kondensators 22 auf einen unteren Grenzwert reduziert, für den ein praxisnaher Wert 2,4 V ist und der zweckmäßigerweise nicht niedriger als 2 V liegt. Danach springt das Verfahren zurück zum Schritt 1. Ergibt jedoch der Vergleich im Schritt 12, dass die Spannung des Kondensators 22 nicht über ihrem oberen Grenzwert von z. B. 3,5 V liegt, dann springt das Verfahren unter Umgehung des Schrittes 13 vom Schritt 12 zurück zum Schritt 1. Der Grenzwert im Schritt 12 muss nicht 3,5 V betragen. Wichtig ist, dass die Reifendruckkontrolleinrichtung gegen Schäden durch eine zu hohe Spannung gesichert ist. Der Grenzwert im Schritt 12 kann auch unter 3,5 V liegen, z. B. bei 3,3 V.

Die Regelschleife für die Spannung U₀ direkt nach der Aktivierung der Reifendruckkontrolleinrichtung und die Regelschleife für die Spannung U₁ nach dem Durchführen des Prozesses 7 können einen Schutz der Reifendruckkontrolleinrichtung gegen Überspannung sicherstellen. Durch die Auswahl der Grenzwerte der Spannung erreicht man, dass für den Überspannungsschutz keine unnötigen Spannungsmessungen durchgeführt werden müssen, was für einen sparsamen Energieverbrauch günstig ist. Der Ladezustand des Kondensators 22 wird durch die Spannungsregelung zwischen zwei so gewählten Grenzwerten gehalten, dass die im Kondensator 22 gespeicherte Energie für wenigstens einen Mess- und Sendevorgang der Reifendruckkontrolleinrichtung ausreicht.

### Bezugszeichenliste

- 1 bis 13: Schritte
- 20: integrierter Schaltkreis
- 21: Oszillator
- 22: Kondensator
- 23: Generator
- 24: Gleichrichter
- 25: Power Management Einheit
- 26: Komparator
- 27: Feldeffekttransistor
- 28: Empfängerspule
- U: Spannung

## Patentansprüche

1. Verfahren zum Betreiben einer Reifendruckkontrolleinrichtung, welche an einem mit einem Luftreifen versehenen Rad eines Fahrzeugs angebracht ist und
- einen Sensor, welcher ein vom Reifendruck abhängiges elektrisches Ausgangssignal liefert,
- einen Sender, welcher in Sendeintervallen, zwischen welchen jeweils eine erste Sendepause liegt, drahtlos Signale sendet, welche eine vom Ausgangssignal des Sensors abhängige Information enthalten,
- eine Steuereinrichtung, welche den Sensor, den Sender und dessen erste Sendepause steuert,
- eine Quelle (23), welche elektrische Energie für das Betreiben der Reifendruckkontrolleinrichtung liefert,
- und einen wiederaufladbaren elektrischen Speicher (22) enthält, in welchem von der Quelle (23) gelieferte elektrische Energie gespeichert wird, bis sie für das Betreiben der Reifendruckkontrolleinrichtung benötigt wird,
**dadurch gekennzeichnet,**
- **dass** der Ladezustand des wiederaufladbaren Speichers (22) durch eine in der Reifendruckkontrolleinrichtung vorgesehene Überwachungseinrichtung (25) überwacht und eine oder mehrere der ersten Sendepausen dann beendet werden, sobald im wiederaufladbaren Speicher (22) genug elektrische Energie gespeichert ist, um die Reifendruckkontrolleinrichtung zwischen zwei aufeinander folgenden ersten Sendepausen bis zum Abschluss einer vorbestimmten Anzahl von Sendvorgängen zu betreiben.

2. Verfahren nach Anspruch 1, **dadurch gekennzeichnet, dass** jede erste Sendepause dann beendet wird, sobald im wiederaufladbaren Speicher (22) genug elektrische Energie gespeichert ist, um die Reifendruckkontrolleinrichtung bis zum Abschluss einer vorbestimmten Anzahl von Mess- und Sendevorgängen zu betreiben.

3. Verfahren nach Anspruch 1 oder 2, **dadurch gekennzeichnet, dass** die vorbestimmte Anzahl der zwischen zwei ersten Sendepausen erfolgenden Mess- und Sendevorgänge, für welche in der vorausgegangenen ersten Sendepause elektrische Energie gespeichert wurde, zu höchstens zwei gewählt wird.

4. Verfahren nach einem der vorstehenden Ansprüche, **dadurch gekennzeichnet, dass** zwischen zwei aufeinanderfolgenden ersten Sendepausen die Sendevorgänge pausenlos oder allenfalls mit zweiten Sendepausen erfolgen, welche klein sind gegen die ersten Sendepausen.

5. Verfahren nach einem der Ansprüche 1 bis 3, **dadurch gekennzeichnet, dass** wenigstens eine oder mehrere der ersten Sendepausen beendet werden, bevor die im wiederaufladbaren (22) Speicher gespeicherte Energie einen Wert erreicht, der für zwei Mess- und Sendevorgänge ausreicht, und dass bereits am Ende des ersten Sendevorgangs die nächste erste Sendepause beginnt.

6. Verfahren nach einem der vorstehenden Ansprüche, **dadurch gekennzeichnet, dass** die Spannung des wiederaufladbaren Speichers (22) überwacht wird und dass der Ladevorgang unterbrochen wird, wenn und solange die Spannung des wiederaufladbaren Speichers (22) über einem vorgegebenen Grenzwert liegt.

7. Verfahren nach einem der vorstehenden Ansprüche, **dadurch gekennzeichnet, dass** in der Reifendruckkontrolleinrichtung das Ausgangssignal des Sensors darauf überwacht wird, ob der gemessene Reifendruck einen vorgegebenen Grenzwert unterschreitet, und dass in diesem Fall eine aktuell bestehende erste Sendepause vorzeitig beendet wird.

8. Verfahren nach einem der vorstehenden Ansprüche, **dadurch gekennzeichnet, dass** in der Reifendruckkontrolleinrichtung das Ausgangssignal des Sensors darauf überwacht wird, ob die Geschwindigkeit, mit welcher sich der gemessene Reifendruck ändert, einen vorgegebenen Grenzwert überschreitet, und dass in diesem Fall eine aktuell bestehende erste Sendepause vorzeitig beendet wird.

9. Verfahren nach einem der vorstehenden Ansprüche, in welchem als wiederaufladbarer Speicher (22) ein Kondensator verwendet wird.

10. Verfahren nach einem der vorstehenden Ansprüche, in welchem die zu speichernde elektrische Energie in der Reifendruckkontrolleinrichtung mit einem Generator (23) erzeugt wird, welcher die elektrische Energie aus der rollenden Bewegung des Rades erzeugt, insbesondere ein Generator, welcher für die Gewinnung der elektrischen Energie den piezoelektrischen Effekt nutzt.

11. Verfahren nach einem der Ansprüche 1 bis 9, in welchem die zu speichernde elektrische Energie von einem außerhalb der Reifendruckkontrolleinrichtung im Fahrzeug mitgeführten Sender an einen in der Reifendruckkontrolleinrichtung vorgesehenen Funkempfänger übertragen wird, welcher sie in den wiederaufladbaren Speicher (22) leitet.

12. Verfahren nach einem der vorstehenden Ansprüche, **dadurch gekennzeichnet, dass** die erste Pausenzeit mit zunehmender Drehzahl des Rades verkürzt wird.

13. Verfahren nach einem der vorstehenden Ansprüche, **dadurch gekennzeichnet, dass** ein Mess- und Sendevorgang dann gestartet wird, wenn der Ladezustand des wiederaufladbaren Speichers (22), insbesondere seine Spannung, zwischen einem oberen Grenzwert und einem unteren Grenzwert liegt, die so gewählt sind, dass damit mindestens ein und höchstens zwei Mess- und Sendevorgänge durchgeführt werden können.

14. Vorrichtung zum Durchführen des Verfahrens zum Betreiben einer Reifendruckkontrolleinrichtung nach einem der vorstehenden Ansprüche, welche an einem mit einem Luftreifen versehenen Rad eines Fahrzeugs angebracht ist und
- einen Sensor, welcher ein vom Reifendruck abhängiges elektrisches Ausgangssignal liefert,
- einen Sender, welcher in Sendeintervallen, zwischen welchen jeweils eine erste Sendepause liegt, drahtlos Signale sendet, welche eine vom Ausgangssignal des Sensors abhängige Information enthalten,
- eine Steuereinrichtung, welche den Sensor, den Sender und dessen erste Sendepause steuert,
- eine Quelle (23), welche elektrische Energie für das Betreiben der Reifendruckkontrolleinrichtung liefert,
- und einen wiederaufladbaren elektrischen Speicher (22) enthält, in welchem von der Quelle (23) gelieferte elektrische Energie gespeichert wird, bis sie für das Betreiben der Reifendruckkontrolleinrichtung benötigt wird,
**dadurch gekennzeichnet,**
- **dass** zum Überwachen des Ladezustands des wiederaufladbaren Speichers (22) eine in der Reifendruckkontrolleinrichtung vorgesehene Überwachungseinrichtung (25) vorgesehen ist, durch welche eine oder mehrere der ersten Sendepausen dann beendet werden können, sobald im wiederaufladbaren Speicher (22) genug elektrische Energie gespeichert ist, um die Reifendruckkontrolleinrichtung zwischen zwei aufeinander folgenden ersten Sendepausen bis zum Abschluss einer vorbestimmten Anzahl von Sendvorgängen zu betreiben.

15. Vorrichtung nach Anspruch 14, **dadurch gekennzeichnet, dass** als wiederaufladbarer Speicher (22) ein Kondensator (22) vorgesehen ist.

16. Vorrichtung nach Anspruch 14 oder 15, **dadurch gekennzeichnet, dass** der Generator (23) die elektrische Energie den piezoelektrischen Effekt nutzend aus der rollenden Bewegung eines Rades gewinnt, an dem die Reifendrucckontrolleinrichtung angebracht ist, und dass der Generator (23) autonom arbeitend in der Reifendruckkontrolleinrichtung angeordnet ist.

17. Vorrichtung nach einem der Ansprüche 14 bis 16, **dadurch gekennzeichnet, dass** die Reifendruckkontrolleinrichtung einen integrierten Schaltkreis (20) enthält, welcher die Messvorgänge bewirkt und seinerseits durch die Überwachungseinrichtung (25) angesteuert wird.

## Claims

1. A method for operating a tire pressure monitoring device which is mounted on a wheel of a vehicle provided with a pneumatic tire and which device comprises
- a sensor, which delivers an electric output signal dependent on the tire pressure,
- a transmitter, which transmits signals wirelessly in transmission intervals, between which in each case there is a first transmission pause, said signals containing information dependent on the output signal of the sensor,
- a control device, which controls the sensor, the transmitter and the first transmission pause thereof,
- a source (23), which provides electrical energy for the operation of the tire pressure monitoring device,
- and a rechargeable electric accumulator (22), in which electrical energy delivered from the source (23) is stored until it is required for the operation of the tire pressure monitoring device,
**characterized in that**
- the state of charge of the rechargeable accumulator (22) is monitored by a monitoring device (25) provided in the tire pressure monitoring device and **in that** one or more of the first transmission pauses is/are ended as soon as enough electrical energy is stored in the rechargeable accumulator (22) to operate the tire pressure monitoring device between two successive first transmission pauses until the conclusion of a predetermined number of transmission processes.

2. The method according to Claim 1, **characterized in that** each first transmission pause is ended as soon as enough electrical energy is stored in the rechargeable accumulator (22) to operate the tire pressure monitoring device until the conclusion of a predetermined number of measurement and transmission processes.

3. The method according to Claim 1 or 2, **characterized in that** the predetermined number of measurement and transmission processes taking place between two first transmission pauses for which electrical energy has been stored in the previous first transmission pause is selected to be at most two.

4. The method according to any one of the preceding claims, **characterized in that**, between two successive first transmission pauses, the transmission processes take place uninterruptedly or at most with second transmission pauses, which are small compared with the first transmission pauses.

5. The method according to any one of Claims 1 to 3, **characterized in that** at least one or more of the first transmission pauses is/are ended before the energy stored in the rechargeable (22) accumulator reaches a value sufficient for two measurement and transmission processes, and **in that** the next first transmission pause starts already at the end of the first transmission process.

6. The method according to any one of the preceding claims, **characterized in that** the voltage of the rechargeable accumulator (22) is monitored, and **in that** the charging process is interrupted when, and for as long as, the voltage of the rechargeable accumulator (22) lies above a predefined limit value.

7. The method according to any one of the preceding claims, **characterized in that** the output signal of the sensor is monitored in the tire pressure monitoring device in order to ascertain whether the measured tire pressure drops below a predefined limit value, and **in that** in this case a current first transmission pause is ended prematurely.

8. The method according to any one of the preceding claims, **characterized in that** the output signal of the sensor is monitored in the tire pressure monitoring device in order to ascertain whether the speed at which the measured tire pressure changes exceeds a predefined limit value, and **in that** in this case a current first transmission pause is ended prematurely.

9. The method according to any one of the preceding claims, in which a capacitor is used as rechargeable accumulator (22).

10. The method according to any one of the preceding claims, in which the electrical energy to be stored is generated in the tire pressure monitoring device using a generator (23), which generates the electrical energy from the rolling movement of the wheel, said generator in particular being a generator which uses the piezoelectric effect in order to recover the electrical energy.

11. The method according to any one of Claims 1 to 9, in which the electrical energy to be stored is transmitted from a transmitter carried in the vehicle outside the tire pressure monitoring device to a radio receiver provided in the tire pressure monitoring device, which radio receiver conducts said energy into the rechargeable accumulator (22).

12. The method according to any one of the preceding claims, **characterized in that** the first pause time is reduced with increasing rotational speed of the wheel.

13. The method according to any one of the preceding claims, **characterized in that** a measurement and transmission process is started when the state of charge of the rechargeable accumulator (22), in particular the voltage thereof, lies between an upper limit value and a lower limit value, which are selected such that at least one and at most two measurement and transmission processes can be carried out.

14. A device for carrying out the method for operating a tire pressure monitoring device according to any one of the preceding claims, which tire pressure monitoring device is mounted on a wheel of a vehicle provided with a pneumatic tire and which tire pressure monitoring device contains
- a sensor, which delivers an electric output signal dependent on the tire pressure,
- a transmitter, which transmits signals wirelessly in transmission intervals, between which in each case there is a first transmission pause, said signals containing information dependent on the output signal of the sensor,
- a control device, which controls the sensor, the transmitter and the first transmission pause thereof,
- a source (23), which provides electrical energy for the operation of the tire pressure monitoring device,
- and a rechargeable electric accumulator (22), in which electrical energy delivered from the source (23) is stored until it is required for the operation of the tire pressure monitoring device,
**characterized in that**
- a monitoring device (25) provided in the tire pressure monitoring device is provided in order to monitor the state of charge of the rechargeable accumulator (22), by which monitoring device one or more of the first transmission pauses can be then ended as soon as enough electrical energy is stored in the rechargeable accumulator (22) to operate the tire pressure monitoring device between two successive first transmission pauses until the conclusion of a predetermined number of transmission processes.

15. The device according to Claim 14, **characterized in that** a capacitor (22) is provided as rechargeable accumulator (22).

16. The device according to Claim 14 or 15, **characterized in that** the generator (23) recovers the electrical energy with use of the piezoelectric effect from the rolling movement of a wheel on which the tire pressure monitoring device is mounted, and **in that** the generator (23) is arranged in an autonomously working manner in the tire pressure monitoring device.

17. The device according to any one of Claims 14 to 16, **characterized in that** the tire pressure monitoring device contains an integrated circuit (20), which brings about the measurement processes and is controlled in turn by the monitoring device (25).

## Revendications

1. Procédé destiné à faire fonctionner un dispositif de contrôle de pression de pneumatique, lequel est monté sur une roue d'un véhicule dotée d'un pneumatique, et contient
- un capteur, lequel fournit un signal initial électrique dépendant de la pression de pneumatique,
- un émetteur, lequel émet sans fil, à des intervalles d'émission entre lesquels se situe respectivement une première pause d'émission, des signaux, lesquels contiennent une information dépendant du signal initial du capteur,
- un système de commande, lequel pilote le capteur, l'émetteur et la première pause d'émission de celui-ci,
- une source (23), laquelle fournit de l'énergie électrique pour le fonctionnement du dispositif de contrôle de pression de pneumatique,
- et un accumulateur électrique rechargeable (22) dans lequel est accumulée l'énergie électrique fournie par la source (23) jusqu'à ce qu'elle soit nécessaire pour le fonctionnement du dispositif de contrôle de pression de pneumatique,
**caractérisé en ce que**
- l'état de charge de l'accumulateur rechargeable (22) est surveillé par un système de surveillance (25) prévu dans le dispositif de contrôle de pression de pneumatique et une ou plusieurs des premières pauses d'émission sont ensuite terminées, dès que suffisamment d'énergie électrique est accumulée dans l'accumulateur rechargeable (22) pour faire fonctionner le dispositif de contrôle de pression de pneumatique entre deux premières pauses d'émission successives jusqu'à la conclusion d'un nombre prédéterminé d'opérations d'émission.

2. Procédé selon la revendication 1, **caractérisé en ce que** chaque première pause d'émission est ensuite terminée, dès que suffisamment d'énergie électrique est accumulée dans l'accumulateur rechargeable (22) pour faire fonctionner le dispositif de contrôle de pression de pneumatique jusqu'à la conclusion d'un nombre prédéterminé d'opérations de mesure et d'émission.

3. Procédé selon la revendication 1 ou 2, **caractérisé en ce que** le nombre prédéterminé des opérations de mesure et d'émission ayant lieu entre deux premières pauses d'émission, est choisi au maximum à deux, pour lequel de l'énergie électrique a été accumulée dans la première pause d'émission précédente.

4. Procédé selon l'une quelconque des revendications précédentes, **caractérisé en ce qu'**entre deux premières pauses d'émission successives, les opérations d'émission ont lieu sans pause ou éventuellement avec des deuxièmes pauses d'émission, lesquelles sont petites par rapport aux premières pauses d'émission.

5. Procédé selon l'une quelconque des revendications 1 à 3, **caractérisé en ce qu'**au moins une ou plusieurs des premières pauses d'émission sont terminées avant que l'énergie accumulée dans l'accumulateur rechargeable (22) n'atteigne une valeur qui est suffisante pour deux opérations de mesure et d'émission et que la première pause d'émission suivante commence déjà à la fin de la première opération d'émission.

6. Procédé selon l'une quelconque des revendications précédentes, **caractérisé en ce que** la tension de l'accumulateur rechargeable (22) est surveillée et **en ce que** l'opération de charge est interrompue lorsque et aussi longtemps que la tension de l'accumulateur rechargeable (22) se situe au-dessus d'une valeur limite prédéfinie.

7. Procédé selon l'une quelconque des revendications précédentes, **caractérisé en ce que** dans le dispositif de contrôle de pression de pneumatique, le signal initial du capteur est surveillé ensuite, si la pression de pneumatique mesurée dépasse inférieurement une valeur limite prédéfinie et que dans ce cas, une première pause d'émission existant actuellement est prématurément terminée.

8. Procédé selon l'une quelconque des revendications précédentes, **caractérisé en ce que** dans le dispositif de contrôle de pression de pneumatique, le signal initial du capteur est surveillé ensuite, si la vitesse à laquelle varie la pression de pneumatique mesurée, dépasse une valeur limite prédéfinie et que dans ce cas, une première pause d'émission existant actuellement est prématurément terminée.

9. Procédé selon l'une quelconque des revendications précédentes, dans lequel un condensateur est utilisé en tant qu'accumulateur rechargeable (22).

10. Procédé selon l'une quelconque des revendications précédentes, dans lequel l'énergie électrique à accumuler est produite avec un générateur (23) dans le dispositif de contrôle de pression de pneumatique, lequel produit de l'énergie électrique à partir du mouvement roulant de la roue, en particulier un générateur, lequel utilise l'effet piézo-électrique pour l'acquisition de l'énergie électrique.

11. Procédé selon l'une quelconque des revendications 1 à 9, dans lequel l'énergie électrique à accumuler est transmise par un émetteur embarqué dans le véhicule en dehors du dispositif de contrôle de pression de pneumatique à un récepteur radio prévu dans le dispositif de contrôle de pression de pneumatique, lequel la dirige dans l'accumulateur rechargeable (22).

12. Procédé selon l'une quelconque des revendications précédentes, **caractérisé en ce que** la première période de pause est réduite avec une rotation croissante de la roue.

13. Procédé selon l'une quelconque des revendications précédentes, **caractérisé en ce qu'**une opération de mesure et d'émission est ensuite lancée, si l'état de charge de l'accumulateur rechargeable (22), en particulier sa tension, se situe entre une valeur limite supérieure et une valeur limite inférieure, qui sont choisies de telle sorte que de ce fait au moins une et au maximum deux opérations de mesure et d'émission puissent être effectuées.

14. Dispositif permettant d'exécuter le procédé destiné à faire fonctionner un dispositif de contrôle de pression de pneumatique selon l'une quelconque des revendications précédentes, lequel est monté sur une roue d'un véhicule dotée d'un pneumatique et
- un capteur, lequel fournit un signal initial électrique dépendant de la pression de pneumatique,
- un émetteur, lequel émet sans fil, à des intervalles d'émission entre lesquels se situe respectivement une première pause d'émission, des signaux, lesquels contiennent une information dépendant du signal initial du capteur,
- un système de commande, lequel pilote le capteur, l'émetteur et la première pause d'émission de celui-ci,
- une source (23), laquelle fournit de l'énergie électrique pour le fonctionnement du dispositif de contrôle de pression de pneumatique,
- et un accumulateur électrique rechargeable (22) dans lequel est accumulée l'énergie électrique fournie par la source (23) jusqu'à ce qu'elle soit nécessaire pour le fonctionnement du dispositif de contrôle de pression de pneumatique,
**caractérisé en ce qu'**
- un dispositif de surveillance (25) prévu dans le dispositif de contrôle de pression de pneumatique est prévu pour la surveillance de l'état de charge de l'accumulateur rechargeable (22), grâce auquel une ou plusieurs des premières pauses d'émission peuvent être ensuite terminées dès que suffisamment d'énergie électrique est accumulée dans l'accumulateur rechargeable (22) pour faire fonctionner le dispositif de contrôle de pression de pneumatique entre deux premières pauses d'émission successives jusqu'à la conclusion d'un nombre prédéterminé d'opérations d'émission.

15. Dispositif selon la revendication 14, **caractérisé en ce qu'**un condensateur (22) est prévu en tant qu' accumulateur rechargeable (22).

16. Dispositif selon la revendication 14 ou 15, **caractérisé en ce que,** le générateur (23) acquiert l'énergie électrique en utilisant l'effet piézo-électrique à partir du mouvement roulant d'une roue sur laquelle est monté le dispositif de contrôle de pression de pneumatique et **en ce que** le générateur (23) est disposé en fonctionnement autonome dans le dispositif de contrôle de pression de pneumatique.

17. Dispositif selon l'une quelconque des revendications 14 à 16, **caractérisé en ce que** le dispositif de contrôle de pression de pneumatique contient un circuit de connexion intégré (20), lequel déclenche les opérations de mesure et est de son côté activé par le dispositif de surveillance (25).
